# EUROPEAN PATENT SPECIFICATION

(11) **EP 3 621 243 B1**
(45) Date of publication and mention of the grant of the patent: **28.06.2023**
(21) Application number: 18793863.4
(22) Date of filing: 02.03.2018
(51) Int. Cl.: H04L 41/0806, H04L 41/0895, H04L 12/46

(54) **VIRTUAL NETWORK CREATION METHOD, APPARATUS AND TRANSPORT NETWORK SYSTEM**
VERFAHREN ZUR ERZEUGUNG EINES VIRTUELLEN NETZWERKS, EINRICHTUNG UND TRANSPORTNETZWERKSYSTEM
PROCÉDÉ DE CRÉATION DE RÉSEAU VIRTUEL, APPAREIL ET SYSTÈME DE RÉSEAU DE TRANSPORT

(30) Priority: 04.05.2017 CN 201710308230
(43) Date of publication of application: 11.03.2020
(73) Proprietor: ZTE Corporation, Shenzhen, Guangdong 518057 (CN)
(72) Inventor: CHEN, Jie, Shenzhen Guangdong 518057 (CN); ZHAO, Fuchuan, Shenzhen Guangdong 518057 (CN); YU, Hongbin, Shenzhen Guangdong 518057 (CN)
(74) Representative: Ipsilon
(86) International application number: PCT/CN2018/077854
(87) International publication number: WO 2018/201787

(56) References cited:
- WO-A1-2014/173263
- CN-A- 103 368 764
- CN-A- 103 430 498
- CN-A- 103 746 925
- CN-A- 105 763 356
- CN-A- 105 763 356
- US-A1- 2014 301 192
- US-A1- 2016 352 653
- US-A1- 2016 380 831

## Description

### TECHNICAL FIELD

The present invention relates to the field of Network communication technologies, and in particular, to a method for creating a virtual network of a transmission network based on a software defined network (SDN), an apparatus for creating a virtual network and a transport network system.

### BACKGROUND

A transmission network which is a basic network of an entire communication network undertakes transmission of a large number of services, and types of the services are very complex, and a number of served clients is large. For example, the types of the services include mobile backhaul, home broadband, internet of things (IoT) application, industrial control application, and the like, and the served clients include mobile backhaul, home broadband, IoT application, industrial control application, and the like. When different clients and different types of services are transmitted on the same physical transmission network, complexity of management and control is caused by a lack of an effective isolation mechanism due to a complete sharing of physical network resources.

In order to solve this problem, some operators adopt a method of building a plurality of planar physical transmission networks, for example, a planar network A and a planar network B may be built to respectively carry mobile backhaul services and government-enterprise services, thereby implementing isolation of physical networks of different services. However, the method of building a plurality of planar physical transmission networks has a problem of large investment and high cost, and resources between different planar transmission networks cannot be coordinated and shared, so that utilization rate of network resources is low.

In order to solve the above problem, a need for virtually sliced the physical transmission network arises. For example, a need scenario of the transmission network of an operator is virtualizing a same metropolitan area network into three different slice networks for performing carryings of mobile backhaul, home customer, and enterprise customer, and this three virtual slice networks are similar to three different platform physical networks and are independent of each other, so that different business departments can manage and control the networks respectively.

A conventional virtual private network (VPN) technology, such as L2VPN (layer-two VPN) or L3VPN (layer-three VPN), is essentially a service virtual private network established in a service layer, and is directly bound to a service, which cannot meet a requirement of slicing one physical transmission network into a plurality of virtual physical transmission networks in a physical network layer.

Therefore, the conventional virtual network technology has problems that physical network sharing is insufficient and resource utilization rate is low. No effective solutions to these problems have been proposed so far.

PCT application publication WO2014173263A1 has disclosed that a service template providing a service may be found according to type of the service, a resource zone matching the service template may be found from a resource pool, a network resource matching a service unit in the service template may be found from the resource zone, a network parameter configured for the service unit may be sent to the network resource.

US application publication US20160352653A1 has disclosed that a software defined networking (SDN) controller is described associated with a local domain and configured to control remote services in a remote domain, the SDN controller includes a network interface communicatively coupled to the remote domain; a processor communicatively coupled to the network interface; and memory storing instructions that, when executed, caused the processor to, subsequent to instantiation of a logical switch in a device in the remote domain, establish a control channel with the logical switch, wherein the control channel flows over the local domain and the remote domain, and control the logical switch in the remote domain via the control channel.

### SUMMARY

The present invention is defined in the appended independent claims to which reference should be made. Advantageous features are set out in the appended dependent claims. Independent claims 1, 11 and 12 provide a method for creating a virtual network, a SDN-based transport network system and an apparatus, which can effectively share physical network resources, improve resource utilization, and facilitate network operation and service deployment.

According to one aspect of the present invention, a method for creating a virtual network is provided. The method according to independent claim 1 includes creating virtual network elements (vNodes) and virtual ports according to virtual port parameters of the virtual network elements; creating virtual links (vLinks) between the virtual ports of the vNodes according to the virtual port parameters; wherein the virtual network elements and the virtual links form a virtual network (vNet), wherein the virtual ports comprise virtual network node ports vNNIs and virtual user network ports vUNIs, wherein creating the vLinks between the virtual ports of the vNodes according to the virtual port parameters includes determining a requirement for creating tunnels according to the virtual port parameters provided by a user, wherein the virtual port parameters comprise at least one of: port information of the vNNIs of A-Z endpoints, routing policy, routing constraint and protection manner; generating a tunnel creating command according to the requirement for creating the tunnels; sending the tunnel creating command to an SDN controller; and creating mapping relation between the vLinks and the tunnels and generating vLink IDs according to tunnel IDs returned by the SDN controller.

According to another aspect of the present invention, a transport network system is provided according to independent claim 11.

According to another aspect of the present invention, an apparatus for creating virtual network is provided according to independent claim 12.

By adopting the above technical solutions, the embodiments of the present invention at least have the following advantages: the scheme according to the embodiments of the present invention can slice a physical network into corresponding virtual networks according to different types of services being carried or different tenants (for example, performing slicing according to government and enterprise clients, home clients, or eMBB services, uRLLC services, and mMTC services), and each virtual transport network has characteristics similar to the physical network. For the services being carried, the virtual network and the physical network sensed by the services are similar, so that requirements for different types of services can be met effectively. Compared with construction of different physical network planes, the embodiments of the present invention perform virtual network slicing on the basis of physical network resource sharing, thereby avoiding problems of large investment, high cost, low utilization rate and the like caused by repeated network construction. Moreover, similar to the physical network, various required services such as L2VPN, L3VPN and the like can be created again based on the sliced virtual networks independent from each other, so that resource utilization rate is higher, scheduling is more flexible, and management, operation and maintenance and service deployment are easier, thereby effectively solving the problems in the prior art.

### BRIEF DESCRIPTION OF THE DRAWINGS

FIG. 1 is a flowchart of a method for creating a virtual network of a SDN-based transmission network according to an embodiment of the present invention;
FIG. 2 is a block diagram of a mode of a network element (Node) slice according to an embodiment of the present invention;
FIG. 3 is a block diagram of a model of link (Link) slices and virtual networks (vNets) according to an embodiment of the present invention;
FIG. 4 is a block diagram of a network slice-based network architecture model according to an embodiment of the present invention;
FIG. 5 is a block diagram of a transmission network system to which a virtual network creation device of a SDN-based transmission network is applied, according to an embodiment of the present invention;
FIG. 6 is a signaling flowchart of a vNet creation process in a network slicing scheme of a SDN-based transmission network according to an embodiment of the present invention;
FIG. 7 is a signaling flowchart of a vNode creation process in a network slicing scheme of a SDN-based transmission network according to an embodiment of the present invention;
FIG. 8 is a signaling flowchart of a vLink creation process in a network slicing scheme of a SDN-based transmission network according to an embodiment of the present invention;
FIG. 9 is a flowchart of a network creation process according to an embodiment of the invention.

### DETAILED DESCRIPTION

In order to further explain technical means and effects of the present invention adopted to achieve an intended purpose, the present invention will be described in detail with reference to accompanying drawings and preferred embodiments.

SDN is a novel network innovation architecture and different from a traditional VPN technology, core technology of the SDN is to separate a controlling plane and a forwarding plane of a network to realize centralized control, and therefore flexible control of network resources and services can be implemented. The embodiments of the invention establishes virtual networks which correspond to network slices implementing a transport network on the basis of a physical network by using network virtualization of the SDN technology.

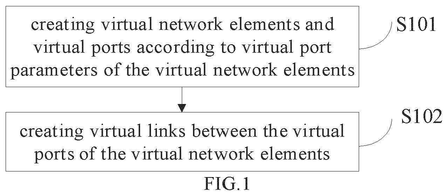

A first embodiment of the present invention provides a method for creating a virtual network, and in particular, provides a method for creating a virtual network of a SDN-based transport network. As shown in FIG. 1, the method includes the following specific steps.

Step S 101, creating virtual network elements (vNodes) and virtual ports according to virtual port parameters of the virtual network elements.

Wherein the virtual port parameters are provided by a user.

Step S102, creating virtual links (vLinks) between the virtual ports of the vNodes; wherein the virtual network elements and the virtual links form a virtual network (vNet).

The method according to the embodiment of the present invention does further include: creating the vNet.

In one embodiment, the vNet may be created prior to the vNodes and/or the vLinks. For example, the creation may be performed in the following order: creating the vNet → creating the vNodes → creating the vLinks; alternatively, the creation may also be performed in the following order: creating the vNodes → creating the vNet → creating the vLinks. In this case, when creating the vNet, since the vNodes and/or the vLinks are not created yet, the vNet may be created according to parameters of the vNet, and when or after creating the vNodes and/or the vLinks, the created vNodes and/or the created vLinks may be added to the vNet. Wherein, the parameters of the vNet may be understood as characteristic parameters, and include but not limited to name, user information, feature description.

In another embodiment, the vNet is created later than the vNodes and the vLinks. In this case, since the vNodes and the vLinks have been created in advance, when creating the vNet, the vNet should be created by referring to the created vNodes and the created vLinks in addition to the parameters of the vNet described above. Specifically, the name of the vNet and a list of the included vNodes need to be referred to in the creation process, wherein all virtual links vLinks between the vNodes are automatically assigned to the vNet. Alternatively, in this embodiment, the vNet may be created according to the parameters of the vNet firstly, and then the created vNodes and the created vLinks may be added to the vNet.

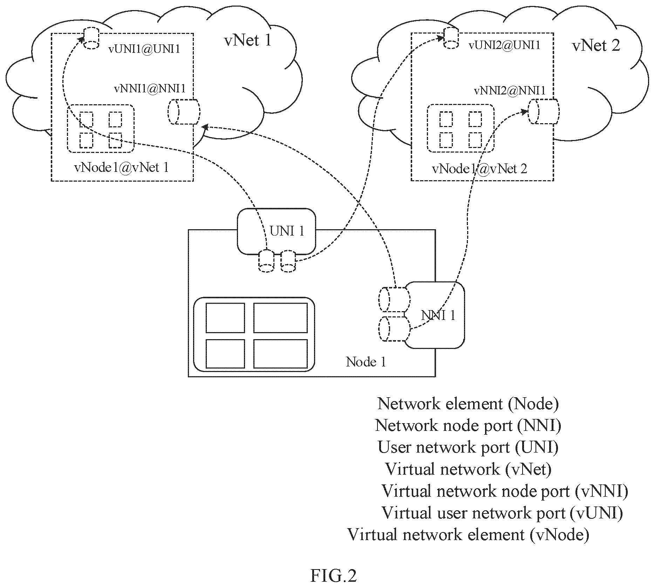

Wherein, the virtual ports described above includes: virtual network node ports (vNNIs) and virtual user network ports (vUNIs). Network elements (Nodes) are core elements that make up a network, and the vNodes make up the vNet. From a perspective of the network, capability of a Node to be presented to the outside is mainly embodied as capabilities of network node ports (NNI) and user network ports (UNI) of the network elements. Therefore, a process of creating the vNodes based on a physical network element (Node) may be understood as virtualized slicing of the Node. For this purpose, virtualization of ports of the Node should be solved firstly. The virtualization of the ports of the Node may also be understood as slicing of the ports. As shown in FIG. 2, a physical network element Node1 includes a UNI port and a NNI port, and the virtual network elements formed after the Node1 is sliced are used to construct different virtual networks vNet1 and vNet2, that is, the virtual network elements formed after Node1 is sliced are a virtual network element vNodel@vNet1 and a virtual network element vNode1@vNet2 respectively in corresponding vNets (vNet1 and vNet2). The virtual network element vNodel@vNet1 includes sliced virtual ports vUNI1@UNI1 and vNNI1@NNI1, and the virtual network element vNode1@vNet2 includes sliced virtual ports vUNI2@UNI1 and vNNI2@NNI1.

The vUNIs can identify and filter traffic flow entering the vNet from ingress (Ingress) of the UNI according to corresponding configuration. The vNNIs are used for subsequent creation of links vLinks between the vNodes.

In addition, in the step of creating a vLink, the vLink can be created between the vNNIs of the vNodes in a manner of establishing a virtual pipeline or a tunnel (Tunnel) according to the virtual port parameters provided by the user, so as to implement reconstruction of a virtual network topology. A network topology can be established according to requirement of the user, and the virtual network topology is not limited to a physical network topology. In the step of creating the vLink, a requirement for creating the tunnel is determined according to the virtual port parameters provided by the user, a tunnel creation command is generated according to the requirement for creating the tunnel, and the tunnel creation command is sent to a SDN controller. The tunnel creation command includes the requirement for creating the tunnel. The virtual port parameters include at least one of port information (including bandwidth information) of the vNNIs of A-Z endpoints, routing policy (e.g., shortest path or load balancing, etc.), routing constraint (e.g., must-pass nodes, must-pass links, exclusion nodes, exclusion links, etc.), protection manner (including path protection or rerouting protection, etc.). Mapping relation between the vLink and the tunnel is created and vLink ID is generated according to tunnel ID returned by the SDN controller (that is, mapping between the virtual resource and the physical resource is completed).

In the process of creating the vLink, after receiving the tunnel creation command, the SDN controller calculates routing of the tunnel and configuration parameters (including parameters of an ingress port and an egress port and the like of each cross node) of cross connection (CrossConnections) according to the requirement for creating the tunnel included in the tunnel creation command, reserves bandwidth resource on the NNI, and sends a cross connection creation command to a network device (Network Element, referred to as NE for short), wherein the cross connection creation command includes the configuration parameters of the cross connection and information of the reserved bandwidth resource; the NE is configured to create the cross connection according to the configuration parameters of the cross connection included in the cross connection creation command by using the reserved bandwidth resource, and send ID of the created cross connection to the SDN controller; after the NE completes the creation of the cross connection (i.e., the reserved resource has been allocated), the SDN controller creates an inclusion relation between the tunnel and the cross connection according to parameters of the created cross connection and parameters of the cross connection returned by the NE, and returns the tunnel ID.

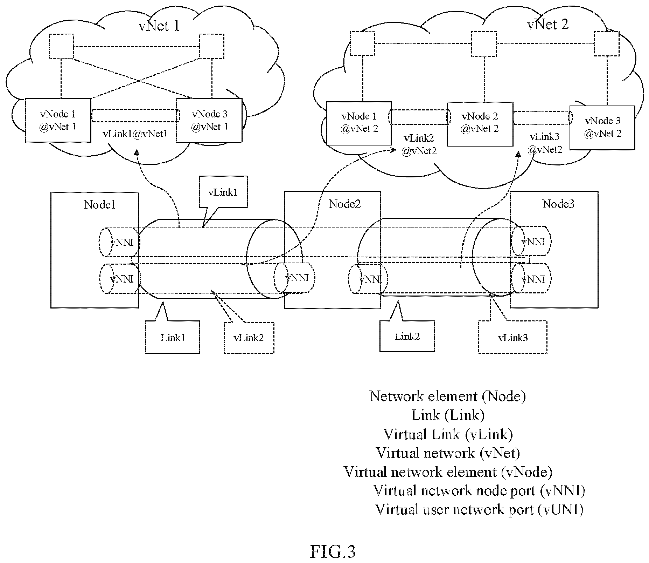

Links are key elements that constitute the network internal connections and the network topology. The vLinks are virtual links between the vNodes through the vNNIs. As shown in FIG. 3, Link1 is a link between physical network elements Node1 and Node2, and Link2 is a link between physical network elements Node2 and Node 3. After the Node1, the Node2 and the Node3 are virtualized sliced, virtual links can be formed between vNNIs of the Node1, the Node2 and the Node3 by establishing virtual pipelines or tunnels as required in order to form a required virtual network topology, thereby implementing the reconstruction of the virtual network topology. In FIG. 3, a vLink1 is a virtual link between a vNode1 and a vNode3, a vLink2 is a virtual link between the vNode1 and a vNode2, and a vLink3 is a virtual link between the vNode2 and the vNode3.

Specific implementing technology of the vLink depends on a forwarding plane technology of the Node. For a packet apparatus network element supporting flexible Ethernet (Flex Ethernet), the vLink may be a Flex Ethernet pipeline; for a packet apparatus network element supporting multi-protocol label switching transport profile (MPLS-TP), the vLink may be an MPLS-TP label switched path (LSP) tunnel; for an apparatus network element supporting an optical transport network (OTN), the vLink may be an optical channel data unit (ODUk) pipeline. The model (namely, the network slice model) and the method for creating the virtual network of the transport network provided by the embodiments of the invention have universality and can be suitable for apparatus network elements adopting various forwarding plane technologies described above.

After the vLinks are successfully created, the SDN controller and the network element side generate corresponding vLinks, vLink identifications (IDs) and working path routing information, or further generate protection path routing information, and reserve bandwidth resource on the network node ports NNIs of each Node on the working path and the protection path along the routing.

Since the vNet is a set of vNodes and vLinks, in the block diagram shown in FIG. 3, the vNet1 may be considered to be composed of virtual network elements such as vNode1@vNet1 and vNode3@vNet1, and virtual links such as vLink1@vNet1; the vNet2 may be considered to be composed of virtual network elements such as vNode1@vNet2, vNode2@vNet2 and vNode3@vNet2, and virtual links such as vLink2@vNet2 and vLink3@vNet2.

Furthermore, in an embodiment, for the creation of the vNodes, the virtual port parameters of each of the virtual network elements include at least one of the name of the vNode, the ID of the Node to which the vNode belongs (since the vNode is created by virtualizing the Node, the Node can be understood as a host of the vNode), the ID of the vNet to which the vNode belongs, the port parameters of the vNNI included in the vNode, and the port parameters of the vUNI included in the vNode. The port parameters of the vNNI include the ID of the network node port (NNI) to which the vNNI belongs and the allocated bandwidth of the vNNI; the port parameters of the vUNI include the ID of the user network port (UNI) to which the vUNI belongs and the allocated bandwidth of the vUNI. The port parameters of the vNNIs and the port parameters of the vUNIs may be stored in respective port attribute lists.

In addition, in the step of creating the vNodes and the virtual ports.

Sending the virtual port parameters of the virtual network elements to the SDN controller.

Creating object instances of the vNodes according to the port IDs returned by the SDN controller and generating the vNode IDs.

The SDN controller is configured to create object instances of the vNNIs and the vUNIs according to the virtual port parameters, reserve resources for the vNodes, the vNNIs and the vUNIs and generate port IDs corresponding to the vNNIs and the vUNIs, and when the resources are reserved for the vNNIs and the vUNIs, the SDN controller is configured to reserve bandwidth resources on the NNIs and the UNIs to which the vNNIs and the vUNIs belong.

Furthermore, after the step of creating the Nodes and the virtual ports, at least one of the following steps may be further performed: modifying the names of the created vNodes, adding or deleting the vNNIs and/or the vUNIs included in the vNodes, modifying port bandwidths of the vNNIs included in the vNodes, and modifying port bandwidths of the vUNIs included in the vNodes.

Further, after the vNets are created, services can be created based on the created vNets. The services include but not limited to at least one of L2VPN, L3 VPN. The creating process of the services based on the created vNets is same as the creating process of the services on the physical network. The characteristics of service configuration and the like of vNets are the same as those of the physical network.

Further, after the step of creating the vNets, at least one of the following steps may be performed: generating the corresponding vNet IDs, modifying the names of the vNets, and adding or deleting the vNodes included in the vNets.

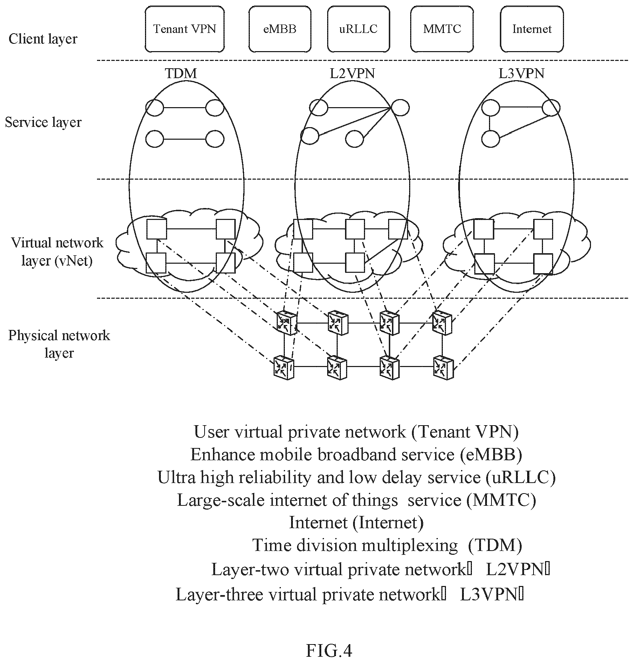

For a traditional transport network, a network architecture is hierarchically divided into a physical network layer, a service layer and a client layer, wherein the service layer is arranged above the physical network layer, namely, the services are directly loaded on the physical network. Based on the network slicing model and network slicing method provided by the embodiments of the present invention, a virtual network layer after slicing is added between the service layer and the physical network layer. After the virtual network creating (slicing) scheme according to the embodiments of the present invention is adopted, a network architecture shown in FIG. 4 is obtained. Referring to FIG. 4, it can be seen that, after slicing is performed according to the slicing scheme provided by the embodiments of the present invention, the obtained network architecture has the following characteristics.
(1) The virtual network layer is positioned between the service layer and the physical network layer, so that decoupling between the service layer and the physical network layer is implemented, and the service layer does not need to sense the physical network.
(2) The virtual networks formed after slicing have physical network-like characteristics. The virtual networks sensed by the service layer are similar to the physical network.
(3) Slices are decoupled from the services, and the slices are independent from the services. Similar to the physical network, the creation of the virtual networks is prior to the creation of the services, and then the services are loaded on the virtual networks, and the services can be flexibly created and adjusted.
(4) The services in the service layer are created based on the virtual networks. Based on vNets, various services such as L2VPN, L3VPN, etc. can be further created.

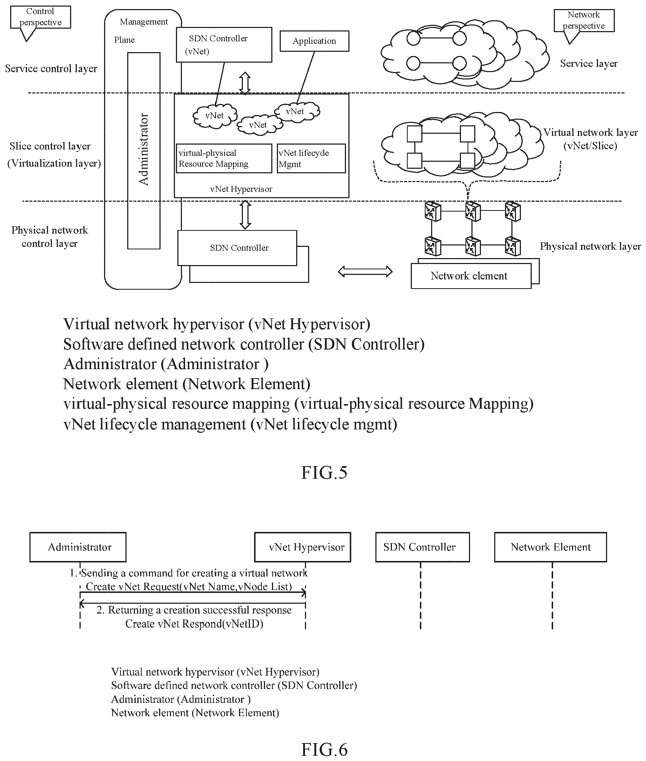

FIG. 5 is a block diagram of an SDN-based transport network system according to an embodiment of the present invention. As shown in FIG. 5, the system includes a vNet manager (equivalent to the device for creating a virtual network of a transport network described above, which may also be referred to as a vNet hypervisor, i.e., a vNet Hypervisor shown in FIG. 5) and an SDN controller. From a perspective of system level, the system shown in FIG. 5 includes a service control layer, a slice control layer (virtualization layer), and a physical network controller layer.

With continued reference to FIG. 5, the SDN Controller (SDN Controller) is located at the physical network control layer and is responsible for controlling the physical network, and the SDN controller can send commands to each network device (Network Element) and control each NE to complete operations such as creating cross connections. The vNet hypervisor is located in the slice control layer (virtualization layer) and is responsible for controlling slicing (virtualization) of the physical network. The vNet Hypervisor includes a virtual- physical resource mapping module (virtual-physical resource mapping) which is configured to map virtual resources and physical resources; a vNet lifecycle managing module (vNet lifecycle mgmt) which is configured to create virtual resources such as the virtual networks vNets and vNodes and vLinks included in the virtual networks vNets and manage lifecycle.

In addition, the vNet Hypervisor according to the embodiment of the present invention may further include a northbound interface module (NBI) which is configured to provide control interfaces of the vNets to a controller or an APP in an upper-layer.

In a specific implementation, the vNet Hypervisor may be an independent system above the SDN Controller, or may be an internal component embedded in the SDN Controller. If the vNet Hypervisor is implemented as the independent system above the SDN Controller, the vNet Hypervisor can access the SDN Controller in a lower layer through a southbound interface module (SBI).

With continued reference to FIG. 5, since the virtual networks vNets are similar to a physical network, the SDN Controller (vNet) in the service control layer controls the vNets similarly to the physical network. One SDN Controller (vNet) instance or APP corresponds to the control of one vNet, so that isolation of different vNet control planes is implemented.

In addition, Administrator in FIG. 5 is a manager of controllers, and is responsible for issuing various configuration commands to the controllers. Each controller may have a uniform Administrator, or may have separate Administrators. In addition, if there is an Orchestrator in an upper-layer, it may also issue configuration commands of network slices to the controllers, and the Administrator described blow may also be replaced with the Orchestrator.

Each creation process according to the embodiment of the present invention will be described below by taking the system shown in FIG. 5 as an example.

As shown in FIG. 6, a process of creating a vNet may specifically include the following steps.
1. The Administrator sends a command Create vNet to the vNet Hypervisor, the command includes the following parameters: a name of a vNet, a list of included vNodes (all virtual links vLinks between the vNodes are automatically assigned to the vNet).
2. After the vNet is successfully created by the vNet Hypervisor, the vNet Hypervisor generates a corresponding vNetID, and returns a vNet creation successful response and the vNetID to the Administrator.

In this process, the vNet is just a logical set of the vNodes and the vLinks created on the vNet Hypervisor, so the SDN Controller and the Network Element do not need to sense the vNet.

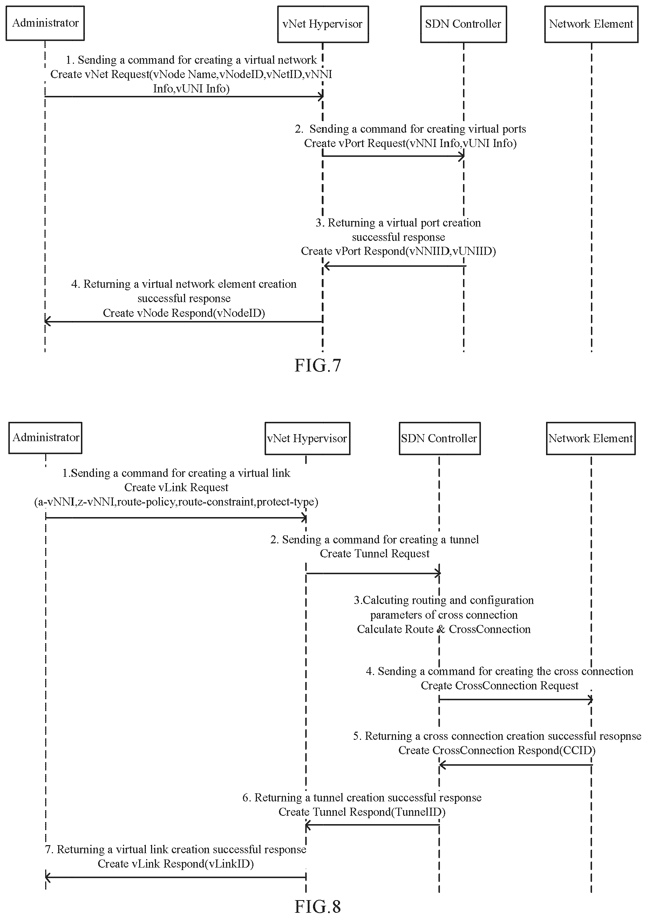

As shown in FIG. 7, a process of creating a vNode may specifically include the following steps.
1. The Administrator sends a command Create vNode to the vNet Hypervisor, the command includes the following parameters: a name of a vNode, a NodeID to which the vNode belongs, an ID of a vNet to which the vNode belongs, vNNI ports and a attribute list (including ID of a NNI to which each vNNI belongs and allocated bandwidths for the vNNIs), a vUNI port and a attribute list (including ID of a UNI to which each vUNI belongs and allocated bandwidths for the vUNIs).
2. The vNet Hypervisor sends a command Create vPort request to the SDN Controller, and the command includes the following parameters: the vNNI ports and the attribute list (including the ID of the NNI to which each vNNI belongs and allocated bandwidths for the vNNIs), the vUNI ports and the attribute list (including the ID of the UNI to which each vUNI belongs and allocated bandwidths for the vUNIs).
3. The SDN Controller creates object instances of the vNNIs and the vUNIs, generates corresponding vNNI IDs and vUNI IDs, and reserves bandwidth resources for the vNNIs and the vUNIs on the corresponding NNIs and UNIs. The SDN Controller returns a vPort creation successful response, the vNNI IDs and the vUNI IDs to the vNet Hypervisor.
4. The vNet Hypervisor creates object instances of the vNodes (including the corresponding vNNI IDs and the corresoponding vUNI IDs), generates vNodeIDs, and returns a vNode creation successful response and the vNodeIDs to the Administrator.

As shown in FIG. 8, a process of creating a vLink may specifically include the following steps.
1. The Administrator sends a command Create vLink to the vNet Hypervisor, the command includes the following parameters: vNNIs on A-Z endpoints (the vNNIs include bandwidth information), a routing policy (such as a shortest path or load balance and the like), a routing constraint (such as a must-pass node, a must-pass link and the like), a protection manner (path 1+1/1:1 protection or rerouting protection and the like).
2. The vNet Hypervisor converts a creation requirement of the vLink into a requirement for creating a Tunnel, and sends a command Create Tunnel Request to the SDN Controller, and the command includes the same parameters described above.
3. The SDN Controller calculates a routing of the Tunnel and configuration parameters of a CrossConnection of network elements on the routing, and reserves bandwidth resource on a corresponding NNI port. The specific CrossConnection parameter and configuration parameters of Nodes depend on a type of the Tunnel, for example, LSP Tunnel or ODUk Tunnel and the like.
4. The SDN Controller sends a command Create CrossConnection to each Network Element according to the calculation result.
5. Each Network Element completes the creation of the CrossConnection, corresponding configuration and resource reservation, and returns a CrossConnection creation successful response and ID of the CrossConnection to the SDN Controller.
6. The SDN Controller creates a inclusion relation between the Tunnel and CrossConnection, generates ID of the Tunnel, and returns a Tunnel creation successful response and the ID of the Tunnel to the vNet Hypervisor.
7. The vNet Hypervisor creates an inclusion relation between the vLink and the Tunnel, generates a vLinkID, and returns a vLink creation successful response and the vLinkID to the Administrator.

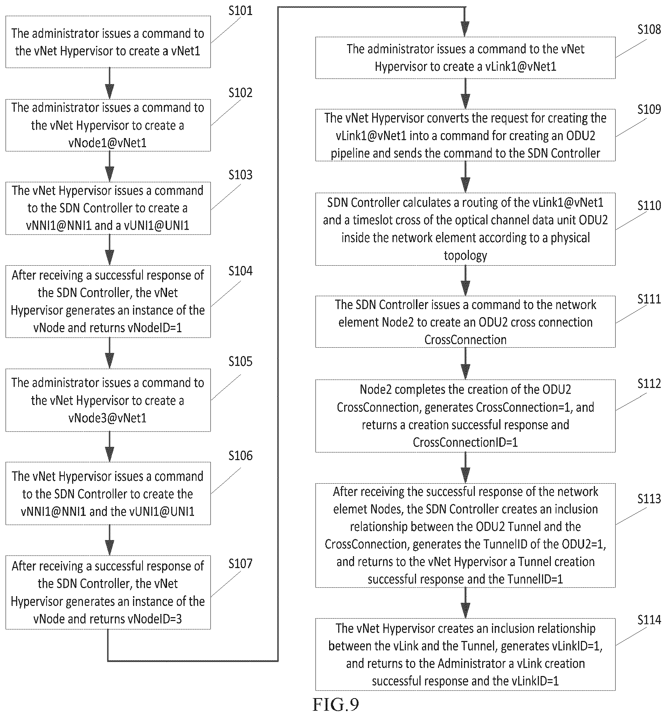

FIG. 9 is a flowchart of a specific implementation of a network slicing process according to an embodiment of the present invention, the process chart includes the following steps.

Step S 101, an administrator issues a command to the vNet Hypervisor to create a vNet instance.

Parameters of the command are as follows.

```
         { vNet Name = "vNet1"; }
```

After the vNet Hypervisor successfully creates the vNet instance, returns vNet ID =100.

Step S102, the administrator issues a command to the vNet Hypervisor to create a vNode1@vNet1, parameters of the command are as follows.

```
         { vNode Name = "vNode1@vNet 1";
         Node ID = 1; // the ID of the physical network element Node1 where the
         vNode is located
         vNetID = 100; // the ID of the vNet to which the vNode belongs
         vNNI List =
             { vNNIName = "vNNI1@NNI1";
                 NNI ID = 101; // the ID of the physical port NNI where the vNNI
                 is located
                 Bandwidth = 10000; // Mb/s };
         vUNI List =
                 { vUNIName = "vUNI@UNI1";
                 UNI ID = 101; // the ID of the physical port UNI where the vUNI
                 is located
                 Bandwidth = 10000; // Mb/s };
```

Step S103, the vNet Hypervisor issues a command to the SDN Controller to create a vNNI1@NNI1 and a vUNI1@UNI1, parameters of the command are as follows.

```
         { Node ID = 1; // the ID of the physical network element Node1 where the
         vNode is located
         vNNI List =
             {NNI ID = 101// the ID of the physical port NNI where the vNNI
             is located
                Bandwidth = 10000; // Mb/s };
         vUNI List =
                { UNI ID = 101; // the ID of the physical port UNI where the vUUI
                is located
                Bandwidth = 10000; // Mb/s};
    }
```

The SDN Controller reserves bandwidth resources for the vNNI1@NNI1, vUNI1@UNI1 on a NNI and a UNI, and returns vNNIID =1011 and vUNIID = 1011.

Step S104, after receiving a successful response of the SDN Controller, the vNet Hypervisor generates a vNode instance, and returns vNodeID = 1.

Step S105, the administrator issues a command to the vNet Hypervisor to create a vNode3@vNet1.

Parameters of the command are as follows.

```
         {vNode Name = "vNode3@vNet 1";
         Node ID = 3; // the ID of the physical network element Node3 where the
         vNode is located
         vNetID = 100; // the ID of the vNet to which the vNode belongs
         vNNI List =
             { NNI ID = 301; // the ID of the physical port NNI where the vNNI
             is located
                Bandwidth = 10000; // Mb/s };
         vUNI List =
             { UNI ID = 301; // the ID of the physical port UNI where the vUNI
             is located
                Bandwidth = 10000; // Mb/s } };
```

Step S106, the vNet Hypervisor issues a command to the SDN Controller to create the vNNI1@NNI1 and the vUNI1@UNI1, wherein parameters of the command are as follows.

```
         { Node ID = 3; // the ID of the physical network element Node3 where the
         vNode is located
         vNNI List =
             { NNI ID = 301; // the ID of the physical port NNI where the vNNI
             is located
                Bandwidth = 10000; // Mb/s };
         vUNI List =
             { UNI ID = 301; // the ID of the physical port UNI where the vUNI
             is located
                Bandwidth = 10000; // Mb/s } };
```

The SDN Controller reserves bandwidth resources on the NNI and the UNI for the vNNI1@NNI1, vUNI@UNI1, and returns vNNIID =3011, vUNIID = 3011.

Step S 107, after receiving a successful response of the SDN Controller, the vNet Hypervisor generates a vNode instance, and returns vNodeID = 3.

Step S 108, the administrator issues a command to vNet Hypervisor to create a vLink1@vNet1.

Parameters of the command are as follows.

```
         { vLink Name = "vLink1@vNet1";
         A-Port =
         { vNode ID = 1; // the ID of the vNode1@vNet1
         vNNIID = 1011; // the ID of the vNNI1@NNI1 };
         Z-Port =
         { vNode ID = 3; // the ID of the vNode3@vNet1
         vNNIID = 3011; // the ID of the vNNI1@NNI1 };
    } // If there is no assignment, a default route policy is a shortest path, and there
    is no route constraint and no protection
```

Step S109, the vNet Hypervisor converts the request for creating the vLink1@vNet1 into a command to create an ODU2 pipeline, and sends the command to the SDN Controller.

Parameters of the command are as follows.

```
         { TunnelType = "ODU 2"; // the type of the pipeline
         A-Port =
         { Node ID = 1; //the ID of the Node1
         vNNIID = 1011; // the ID of the vNNI1@NNI1 };
         Z-Port =
         { Node ID = 3; // the ID of the Node3
         vNNIID = 3011; // the ID of the vNNI1@NNI1 };
    } // If there is no assignment, a default route policy is a shortest path, and there
    is no route constraint and no protection
```

Step S110, the SDN Controller calculates, based on the physical topology, that a routing of the vLink1@vNet1 is Node1-Node2-Node3, and calculates timeslot cross of an optical channel data unit ODU2 inside the Node 2.

Step S 111, the SDN Controller issues a command for creating an ODU2 CrossConnection to the network element Node 2.

Step S112, the Node2 completes the creation of the ODU2 CrossConnection, generates CrossConnection =1, and returns a creation successful response and CrossConnection ID = 1.

Step S113, after receiving the successful response of the network element Node2, the SDN Controller creates an inclusion relation between the ODU2 Tunnel and the CrossConnection, generates a TunnelID of the created ODU2 = 1, and returns a Tunnel creation successful response and the TunnelID = 1 to the vNet Hypervisor.

Step S114, the vNet Hypervisor creates an inclusion relation between the vLink and the Tunnel, generates vLinkID =1, and returns a vLink creation successful response and vLinkID = 1 to the Administrator.

In summary, the scheme according to the embodiment of the present invention can slice a physical network into corresponding virtual networks according to different types of services being carried or different tenants (for example, performing slicing according to government and enterprise clients, home clients, or enhanced mobile broadband eMBB services, ultra-high reliability and low latency uRLLC services, and large-scale internet of things mMTC services), and each virtual transport network has characteristics similar to the physical network. For the services being carried, the virtual network and the physical network sensed by the services are similar, so that requirements for different types of services can be met effectively. Compared with construction of different physical network planes, the embodiment of the present invention performs virtual network slicing on the basis of physical network resource sharing, thereby avoiding problems of large investment, high cost, low utilization rate and the like caused by repeated network construction. Moreover, similar to the physical network, various required services such as L2VPN, L3VPN and the like can be created again based on the sliced virtual networks independent from each other, so that resource utilization rate is higher, scheduling is more flexible, and management, operation and maintenance and service deployment are easier, thereby effectively solving the problems in the prior art.

In addition, the method for creating a virtual network of a SDN-based transport network according to the embodiment of the present invention may be implemented by software and a necessary general hardware platform, and may of course be implemented by hardware, but the former is a better implementation in many cases. With this understanding, the method of the embodiment of the present invention may be embodied in a computer software product stored in a storage medium (e.g., ROM/RAM, magnetic disk, optical disk), and the computer soft product includes instructions for causing an apparatus (e.g., a network apparatus such as a base station) to perform the method of the embodiment of the present invention.

According to another embodiment of the invention, an apparatus for creating a virtual network is also provided. The apparatus for creating a virtual network includes a memory and a processor, wherein the memory has stored thereon a computer program operable on the processor, the computer program, when executed by the processor, implements the steps of method claim 1.

In addition, according to the virtual port parameters, the step of creating the vLinks between the virtual ports of the vNodes specifically includes: creating the vLinks between the vNNIs of the vNodes according to the virtual port parameters provided by the user, so as to realize reconstruction of a virtual network topology.

According to tunnel IDs returned by the SDN controller, creating mapping relation between the vLinks and the tunnels and generating vLink IDs.

In one embodiment, the SDN controller is configured to calculate routings of tunnels and configuration parameters of cross connections according to the requirement for creating the tunnels included in the tunnel creating command, reserve bandwidth resources on the NNIs, and send a cross connection creating command to a Network Equipment (NE), where the cross connection creating command includes configuration parameters of the cross connections and information of the reserved bandwidth resources; the SDN controller is also configured to create inclusion relation between the tunnels and the cross connections and generate tunnel IDs according to the configuration parameters of the cross connections and IDs of the cross connections returned by the NE in a case where the NE successfully creates the cross connections.

And the NE is configured to create cross connections according to the configuration parameters of the cross connections included in the cross connection creating command by using the reserved bandwidth resources, and send IDs of the created cross connections to the SDN controller.

In addition, the virtual port parameters of each of the virtual network elements include at least one of: a name of the vNode, ID of a Node to which the vNode belongs, ID of a vNet to which the vNode belongs, port parameters of vNNI included in the vNode, and port parameters of vUNI included in the vNode. The port parameters of the vNNI include the ID of the network node port NNI to which the vNNI belongs and the allocated bandwidth of the vNNI, and the port parameters of the vUNI include the ID of the user network port UNI to which the vUNI belongs and the allocated bandwidth of the vUNI.

In one embodiment, the step of creating the vNodes and the virtual ports according to the virtual port parameters of the virtual network elements provided by the user specifically includes: sending the virtual port parameters of the virtual network elements to the SDN controller; creating object instances of the vNodes according to port IDs returned by the SDN controller and generating vNode IDs.

The SDN controller is configured to create object instances of the vNNIs and the vUNIs according to the virtual port parameters, reserve resources for the vNodes, the vNNIs and the vUNIs and generate port IDs corresponding to the vNNIs and the vUNIs, and when the resources are reserved for the vNNIs and the vUNIs, the SDN controller is configured to reserve bandwidth resources on the NNIs and the UNIs to which the vNNIs and the vUNIs belong.

Furthermore, after the virtual network elements vNodes and the virtual ports are created according to the virtual port parameters of the virtual network elements provided by the user, the computer program, when executed by the processor, implements at least one of the following steps of: modifying the names of the created vNodes, adding or deleting the vNNIs and/or the vUNIs included in the vNodes, and modifying port bandwidths of the vNNIs and the vUNIs included in the vNodes.

Further, the computer program, when executed by the processor, further implements the steps of creating the vNet.

When the vNet is created prior to the vNodes and/or the vLinks, the vNet is created according to the parameters of the vNet, and the created vNodes and/or the created vLinks are added into the vNet when or after the vNodes and/or the vLinks are created.

When the vNet is created later than the vNodes and the vLinks, the vNet is created according to lists of the created vNodes and vLinks included in the parameters of the vNet; alternatively, the vNet is created according to the parameters of the vNet, and then the created vNodes and the created vLinks are added into the created vNet.

Further, after the vNet is created, the computer program, when executed by the processor, further implements the steps of: generating a corresponding vNet ID, modifying the name of the vNet, and adding or deleting the vNodes included in the vNet.

Furthermore, after the vNet is created, the method according to an embodiment of the present invention further includes: creating services based on the created vNet, the services including but not limited to at least one of L2VPN and L3VPN.

Through the description of the specific embodiments, the technical means and effects adopted by the present invention to achieve the intended purpose can be more deeply and specifically understood. However, the accompanying drawings are only for reference and description, and are not intended to be used to modify the present invention limit. The present invention is solely defined by the appended claims.

### Industrial Applicability

The embodiments of the invention perform virtual network slicing on the basis of physical network resource sharing, thereby avoiding problems of large investment, high cost, low utilization rate and the like caused by repeated network construction. In addition, similar to a physical network, various required services such as L2VPN, L3VPN and the like can be created again based on sliced virtual networks independent from each other, so that resource utilization rate is higher, scheduling is more flexible, and management, operation and maintenance and service deployment are easier, thereby effectively solving the problems in the prior art.

## Claims

1. A method for creating virtual network, the method comprising:
creating (S101) virtual network elements vNodes and virtual ports according to virtual port parameters of the vNodes; and
creating (S102) virtual links vLinks between the virtual ports of the vNodes according to the virtual port parameters,
wherein the vNodes and the vLinks form a virtual network vNet,
wherein the virtual ports comprise virtual network node ports vNNIs and virtual user network ports vUNIs,
wherein creating the vLinks between the virtual ports of the vNodes according to the virtual port parameters comprises:
determining a requirement for creating tunnels according to the virtual port parameters provided by a user, wherein the virtual port parameters comprise at least one of: port information of the vNNIs of A-Z endpoints, routing policy, routing constraint and protection manner;
generating a tunnel creating command according to the requirement for creating the tunnels;
sending the tunnel creating command to an SDN controller; and
creating mapping relation between the vLinks and the tunnels and generating vLink IDs according to tunnel IDs returned by the SDN controller.

2. The method for creating virtual network of claim 1, wherein creating the vLinks between the virtual ports of the vNodes according to the virtual port parameters comprises:
creating the vLinks between the vNNIs of the vNodes according to the virtual port parameters.

3. The method for creating virtual network of claim 1, wherein the SDN controller is configured to:
calculate routings of the tunnels and configuration parameters of cross connections according to the requirement for creating the tunnels comprised in the tunnel creating command,
reserve bandwidth resources on network node ports NNIs, and
send a cross connection creating command to a network equipment NE, wherein the cross connection creating command comprises the configuration parameters of the cross connections and information of the reserved bandwidth resources;
the SDN controller is further configured to:
in a case where the NE successfully creates the cross connections, create inclusion relation between the tunnels and the cross connections and generate the tunnel IDs according to the configuration parameters of the cross connections and IDs of the cross connections returned by the NE,
the NE is configured to:
create the cross connections according to the configuration parameters of the cross connections comprised in the cross connection creating command by using the reserved bandwidth resources, and
send the IDs of the created cross connections to the SDN controller.

4. The method for creating virtual network of claim 1, wherein the virtual port parameters of each of the vNodes comprise at least one of:
a name of the vNode, ID of a Node to which the vNode belongs, ID of a vNet to which the vNode belongs, port parameters of vNNI comprised in the vNode, and port parameter of vUNI comprised in the vNode,
wherein the port parameters of the vNNI comprise ID of a network node port NNI to which the vNNI belongs and allocated bandwidth of the vNNI, and the port parameters of the vUNI comprise ID of a user network port UNI to which the vUNI belongs and allocated bandwidth of the vUNI.

5. The method for creating virtual network of claim 4, wherein creating the vNodes and the virtual ports according to the virtual port parameters of the vNodes comprises:
sending the virtual port parameters of the virtual network elements to an SDN controller;
creating object instances of the vNodes and generating vNode IDs according to port IDs returned by the SDN controller;
wherein the SDN controller is configured to:
create object instances of the vNNIs and the vUNIs according to the virtual port parameters,
reserve resources for the vNodes, the vNNIs and the vUNIs, and
generate the port IDs corresponding to the vNNIs and the vUNIs,
wherein when reserving the resources for the vNNIs and the vUNIs, the SDN controller is configured to reserve bandwidth resources on the NNIs and the UNIs to which the vNNIs and the vUNIs belong.

6. The method for creating virtual network of claim 1, wherein after creating the vNodes and the virtual ports according to the virtual port parameters of the vNodes, the method further comprises at least one of:
modifying names of the created vNodes,
adding or deleting the vNNIs and/or the vUNIs comprised in the vNodes, and
modifying port bandwidths of the vNNIs and the vUNIs comprised in the vNodes.

7. The method for creating virtual network of claim 1, further comprising:
creating the vNet;
wherein in a case where the vNet is created prior to the vNodes and/or the vLinks, the vNet is created according to parameters of the vNet, and the created vNodes and/or the created vLinks are added into the vNet when or after the vNodes and/or the vLinks are created; or
in a case where the vNet is created later than the vNodes and the vLinks, the vNet is created according to the parameters of the vNet and lists of the created vNodes and the created vLinks; or the vNet is created according to the parameters of the vNet, and then the created vNodes and the created vLinks are added into the created vNet.

8. The method for creating virtual network of claim 7, wherein after the vNet is created, the method further comprises:
creating services based on the created vNet,
wherein the services comprise at least one of layer-two virtual private network L2VPN, and layer-three virtual private network L3VPN.

9. The method for creating virtual network of claim 7, wherein after the vNet is created, the method further comprises:
generating a corresponding vNet ID;
modifying name of the vNet; and
adding or deleting the vNodes contained in the vNet.

10. The method for creating virtual network of any one of claims 1 to 9, wherein the vLinks are at least one of: a flexible ethernet pipeline, a multiprotocol label switching transport profile MPLS-TP label switched path LSP tunnel, and an optical path data unit ODUk pipeline.

11. A transport network system comprising a vNet manager and an SDN controller, wherein
the vNet manager is configured to:
create virtual network elements vNodes and virtual ports according to virtual port parameters of the vNodes;
create virtual links vLinks between the virtual ports of the vNodes according to the virtual port parameters,
wherein the vNodes and the vLinks form a virtual network vNet,
the SDN controller is configured to communicate with the vNet manager and assist the vNet manager in completing creation of the vNodes and the vLinks,
wherein the virtual ports comprise virtual network node ports vNNIs and virtual user network ports vUNIs,
wherein the vNet manager is further configured to:
determine a requirement for creating tunnels according to the virtual port parameters provided by a user, wherein the virtual port parameters comprise at least one of: port information of the vNNIs of A-Z endpoints, routing policy, routing constraint and protection manner;
generate a tunnel creating command according to the requirement for creating the tunnels;
send the tunnel creating command to an SDN controller; and
create mapping relation between the vLinks and the tunnels and generating vLink IDs according to tunnel IDs returned by the SDN controller.

12. An apparatus for creating virtual network comprising a memory and a processor, the memory storing a computer program that, when executed by the processor, cause the processor to perform the steps of any one of claims 1 to 10.

## Patentansprüche

1. Verfahren zum Erzeugen eines virtuellen Netzwerks, wobei das Verfahren Folgendes umfasst:
Erzeugen (S101) von Elementen des virtuellen Netzwerks vNodes und virtuellen Anschlüssen gemäß Parametern für virtuelle Anschlüsse der vNodes und
Erzeugen (S102) virtueller Verbindungen vLinks zwischen den virtuellen Anschlüssen der vNodes gemäß den Parametern für virtuelle Anschlüsse,
wobei die vNodes und die vLinks ein virtuelles Netzwerk vNet bilden,
wobei die virtuellen Anschlüsse Anschlüsse für Knoten des virtuellen Netzwerks vNNls und Anschlüsse für ein virtuelles Benutzernetzwerk vUNls umfassen,
wobei das Erzeugen der vLinks zwischen den virtuellen Anschlüssen der vNodes gemäß den Parametern für virtuelle Anschlüsse Folgendes umfasst:
Bestimmen eines Erfordernisses zum Erzeugen von Tunneln gemäß den Parametern für virtuelle Anschlüsse, die von einem Benutzer bereitgestellt werden, wobei die Parameter für virtuelle Anschlüsse mindestens eines des Folgenden umfassen:
Anschlussinformationen der vNNIs von A-Z Endpunkten, Routing-Richtlinie, Routing-Bedingung und Art und Weise des Schutzes,
Generieren eines Tunnelerzeugungsbefehls gemäß dem Erfordernis zum Erzeugen der Tunnel,
Senden des Tunnelerzeugungsbefehls an eine SDN-Steuerung und
Erzeugen eines Abbildungsverhältnisses zwischen den vLinks und den Tunneln und Generieren von vLink-IDs gemäß Tunnel-IDs, die von der SDN-Steuerung zurückgegeben werden.

2. Verfahren zum Erzeugen eines virtuellen Netzwerks nach Anspruch 1, wobei das Erzeugen der vLinks zwischen den virtuellen Anschlüssen der vNodes gemäß den Parametern für virtuelle Anschlüsse Folgendes umfasst:
Erzeugen der vLinks zwischen den vNNls der vNodes gemäß den Parametern für virtuelle Anschlüsse.

3. Verfahren zum Erzeugen eines virtuellen Netzwerks nach Anspruch 1, wobei die SDN-Steuerung für Folgendes konfiguriert ist:
Berechnen von Routings der Tunnel und von Konfigurationsparametern von Querverbindungen gemäß dem Erfordernis zum Erzeugen der Tunnel, das in dem Tunnelerzeugungsbefehl enthalten ist,
Reservieren von Bandbreitenressourcen an Netzwerkknotenanschlüssen NNIs und Senden eines Querverbindungserzeugungsbefehls an eine Netzwerkausrüstung NE, wobei der Querverbindungserzeugungsbefehl die Konfigurationsparameter der Querverbindungen und Informationen der reservierten Bandbreitenressourcen umfasst,
wobei die SDN-Steuerung ferner für Folgendes konfiguriert ist:
wenn die NE die Querverbindungen erfolgreich erzeugt, Erzeugen eines Inklusionsverhältnisses zwischen den Tunneln und den Querverbindungen und Generieren der Tunnel-IDs gemäß den Konfigurationsparametern der Querverbindungen und der IDs der Querverbindungen, die durch die NE zurückgegeben werden,
wobei die NE für Folgendes konfiguriert ist:
Erzeugen der Querverbindungen gemäß den Konfigurationsparametern der Querverbindungen, die in dem Querverbindungserzeugungsbefehl enthalten sind, mit Hilfe der reservierten Bandbreitenressourcen und
Senden der IDs der erzeugten Querverbindungen an die SDN-Steuerung.

4. Verfahren zum Erzeugen eines virtuellen Netzwerks nach Anspruch 1, wobei die Parameter für virtuelle Anschlüsse von jedem der vNodes mindestens eines des Folgenden umfassen:
einen Namen des vNode, eine ID eines Knotens, zu dem der vNode gehört, eine ID eines vNet, zu dem der vNode gehört, Anschlussparameter des vNNI, der in dem vNode enthalten ist, und Anschlussparameter des vUNI, der in dem vNode enthalten ist,
wobei die Anschlussparameter des vNNI eine ID eines Netzwerkknotenanschlusses NNI, zu dem der vNNI gehört, und zugewiesene Bandbreite des vNNI umfasst und die Anschlussparameter des vUNI eine ID eines Benutzernetzwerkanschlusses UNI, zu dem der vUNI gehört, und zugewiesene Bandbreite des vUNI umfasst.

5. Verfahren zum Erzeugen eines virtuellen Netzwerks nach Anspruch 4, wobei das Erzeugen der vNodes und der virtuellen Anschlüsse gemäß den Parametern für virtuelle Anschlüsse Folgendes umfasst:
Senden der Parameter für virtuelle Anschlüsse der Elemente des virtuellen Netzwerks an eine SDN-Steuerung,
Erzeugen von Objektinstanzen der vNodes und Generieren von v vNode-IDs gemäß Anschluss-IDs, die von der SDN-Steuerung zurückgegeben werden,
wobei die SDN-Steuerung für Folgendes konfiguriert ist:
Erzeugen von Objektinstanzen der vNNls und der vUNls gemäß den Parametern für virtuelle Anschlüsse,
Reservieren von Ressourcen für die vNodes, die vNNIs und die vUNls und
Generieren der Anschluss-IDs entsprechend den vNNls und den vUNls,
wobei die SDN-Steuerung dafür konfiguriert ist, beim Reservieren der Ressourcen für die vNNls und die vUNls Bandbreitenressourcen an den NNIs und den UNIs zu reservieren, zu denen die vNNls und vUNls gehören.

6. Verfahren zum Erzeugen eines virtuellen Netzwerks nach Anspruch 1, wobei das Verfahren nach dem Erzeugen der vNodes und der virtuellen Anschlüsse gemäß den Parametern für virtuelle Anschlüsse der vNodes ferner mindestens eines des Folgenden umfasst:
Modifizieren von Namen der erzeugten vNodes,
Hinzufügen oder Löschen der vNNls und/oder der vUNls, die in den vNodes enthalten sind, und
Modifizieren von Anschlussbandbreiten der vNNls und vUNls, die in den vNodes enthalten sind.

7. Verfahren zum Erzeugen eines virtuellen Netzwerks nach Anspruch 1, ferner Folgendes umfassend:
Erzeugen des vNet,
wobei das vNet, wenn das vNet vor den vNodes und/oder den vLinks erzeugt wird, gemäß den Parametern des vNet erzeugt wird und die erzeugten vNodes und/oder die erzeugten vLinks dem vNet beim oder nach dem Erzeugen der vNodes und/oder der vLinks hinzugefügt werden, oder
das vNet, wenn es später als die vNodes und vLinks erzeugt wird, gemäß den Parametern des vNet und Listen der erzeugten vNodes und der erzeugten vLinks erzeugt wird, oder das vNet gemäß den Parametern des vNet erzeugt wird und dann die erzeugten vNodes und die erzeugten vLinks zu dem erzeugten vNet hinzugefügt werden.

8. Verfahren zum Erzeugen eines virtuellen Netzwerks nach Anspruch 7, wobei das Verfahren nach dem Erzeugen des vNet ferner Folgendes umfasst:
Erzeugen von Diensten basierend auf dem erzeugten vNet,
wobei die Dienste mindestens eines von L2VPN Layer-two Virtual Private Network und L2VPN Layer-three Virtual Private Network umfassen.

9. Verfahren zum Erzeugen eines virtuellen Netzwerks nach Anspruch 7, wobei das Verfahren nach dem Erzeugen des vNet ferner Folgendes umfasst:
Erzeugen einer entsprechenden vNet-ID,
Modifizieren des Namens des vNet und
Hinzufügen oder Löschen der in dem vNet enthaltenen vNodes.

10. Verfahren zum Erzeugen eines virtuellen Netzwerks nach einem der Ansprüche 1 bis 9, wobei die vLinks mindestens eines des Folgenden sind: eine flexible Ethernet-Pipeline, ein MPLS-TP- Multiprotocol-Switching-Transport-Profile- LSP- Label-Switched-Path-Tunnel und eine ODUk- Optical-Path-Data-Unit-Pipeline.

11. Transportnetzwerksystem, eine vNet-Verwaltung und eine SDN-Steuerung umfassend,
wobei die vNet-Verwaltung für Folgendes konfiguriert ist:
Erzeugen von Elementen des virtuellen Netzwerks vNodes und virtuellen Anschlüssen gemäß Parametern für virtuelle Anschlüsse der vNodes und
Erzeugen virtueller Verbindungen vLinks zwischen den virtuellen Anschlüssen der vNodes gemäß den Parametern für virtuelle Anschlüsse,
wobei die vNodes und die vLinks ein virtuelles Netzwerk vNet bilden,
wobei die SDN-Steuerung dafür konfiguriert ist, mit der vNet-Verwaltung zu kommunizieren und die vNet-Verwaltung beim Fertigstellen des Erzeugens der vNodes und vLinks zu unterstützen,
wobei die virtuellen Anschlüsse Anschlüsse für Knoten des virtuellen Netzwerks vNNls und Anschlüsse für ein virtuelles Benutzernetzwerk vUNls umfassen,
wobei die vNet-Verwaltung ferner für Folgendes konfiguriert ist:
Bestimmen eines Erfordernisses zum Erzeugen von Tunneln gemäß den Parametern für virtuelle Anschlüsse, die von einem Benutzer bereitgestellt werden, wobei die Parameter für virtuelle Anschlüsse mindestens eines des Folgenden umfassen:
Anschlussinformationen der vNNls von A-Z Endpunkten, Routing-Richtlinie, Routing-Bedingung und Art und Weise des Schutzes,
Generieren eines Tunnelerzeugungsbefehls gemäß dem Erfordernis zum Erzeugen der Tunnel,
Senden des Tunnelerzeugungsbefehls an eine SDN-Steuerung und
Erzeugen eines Abbildungsverhältnisses zwischen den vLinks und den Tunneln und Generieren von vLink-IDs gemäß Tunnel-IDs, die von der SDN-Steuerung zurückgegeben werden.

12. Vorrichtung zum Erzeugen eines virtuellen Netzwerks, die einen Speicher und einen Prozessor umfasst, wobei der Speicher ein Computerprogramm speichert, das bei Ausführung durch den Prozessor den Prozessor veranlasst, die Schritte nach einem der Ansprüche 1 bis 10 durchzuführen.

## Revendications

1. Procédé de création d'un réseau virtuel, le procédé comprenant les étapes ci-dessous consistant à :
créer (S101) des éléments de réseau virtuel, vNodes, et des ports virtuels selon des paramètres de ports virtuels des éléments de réseau virtuel « vNodes » ; et
créer (S102) des liaisons virtuelles, vLinks, entre les ports virtuels des éléments de réseau virtuel « vNodes » selon les paramètres de ports virtuels ;
dans lequel les éléments de réseau virtuel « vNodes » et les liaisons virtuelles « vLinks » forment un réseau virtuel, vNet ;
dans lequel les ports virtuels comprennent des ports de noeuds de réseau virtuel, vNNI, et des ports de réseau d'utilisateur virtuel, vUNI ;
dans lequel l'étape de création des liaisons virtuelles « vLinks » entre les ports virtuels des éléments de réseau virtuel « vNodes » selon les paramètres de ports virtuels comprend les étapes ci-dessous consistant à :
déterminer une exigence de création de tunnels selon les paramètres de ports virtuels fournis par un utilisateur, dans lequel les paramètres de ports virtuels comprenant au moins l'un des éléments parmi : des informations de ports des ports de noeuds de réseau virtuel « vNNI » de points d'extrémité A-Z, une politique de routage, une contrainte de routage et un mode de protection ;
générer une instruction de création de tunnels selon l'exigence de création des tunnels ;
envoyer l'instruction de création de tunnels à un contrôleur de réseau SDN ; et
créer une relation de mise en correspondance entre les liaisons virtuelles « vLinks » et les tunnels, et générer des identifiants, ID, de liaisons virtuelles « vLink » selon des identifiants, ID, de tunnels renvoyés par le contrôleur de réseau SDN.

2. Procédé de création de réseau virtuel selon la revendication 1, dans lequel l'étape de création des liaisons virtuelles « vLinks » entre les ports virtuels des éléments de réseau virtuel « vNodes » selon les paramètres de ports virtuels comprend l'étape ci-dessous consistant à :
créer les liaisons virtuelles « vLinks » entre les ports de noeuds de réseau virtuel « vNNI » des éléments de réseau virtuel « vNodes » selon les paramètres de ports virtuels.

3. Procédé de création de réseau virtuel selon la revendication 1, dans lequel le contrôleur de réseau SDN est configuré de manière à :
calculer des routages des tunnels et des paramètres de configuration de connexions transversales selon l'exigence de création des tunnels comprise dans l'instruction de création de tunnels,
réserver des ressources de bande passante sur des ports de noeuds de réseau, NNI ; et
envoyer une instruction de création de connexions transversales à un équipement de réseau, NE, dans lequel l'instruction de création de connexions transversales comprend les paramètres de configuration des connexions transversales et des informations des ressources de bande passante réservées ;
dans lequel le contrôleur de réseau SDN est en outre configuré de manière à :
dans un cas où l'équipement NE crée avec succès les connexions transversales, créer une relation d'inclusion entre les tunnels et les connexions transversales, et générer les identifiants, ID, de tunnels selon les paramètres de configuration des connexions transversales et les identifiants, ID, des connexions transversales renvoyés par l'équipement NE ;
dans lequel l'équipement NE est configuré de manière à :
créer les connexions transversales selon les paramètres de configuration des connexions transversales compris dans l'instruction de création de connexions transversales, en utilisant les ressources de bande passante réservées ; et
envoyer les identifiants, ID, des connexions transversales créées, au contrôleur de réseau SDN.

4. Procédé de création de réseau virtuel selon la revendication 1, dans lequel les paramètres de ports virtuels de chacun des éléments de réseau virtuel « vNodes » comprennent au moins l'un des éléments parmi :
un nom de l'élément de réseau virtuel « vNode », un identifiant, ID, d'un noeud auquel l'élément de réseau virtuel « vNode » appartient, un identifiant, ID, d'un réseau virtuel « vNet » auquel l'élément de réseau virtuel « vNode » appartient, des paramètres de ports de ports de noeuds de réseau virtuel « vNNI » compris dans l'élément de réseau virtuel « vNode », et un paramètre de port d'un port de réseau d'utilisateur virtuel « vUNI » compris dans l'élément de réseau virtuel « vNode » ;
dans lequel les paramètres de ports du port de noeuds de réseau virtuel « vNNI » comprennent un identifiant, ID, d'un port de noeud de réseau, NNI, auquel le port de noeuds de réseau virtuel « vNNI » appartient, et une largeur de bande allouée du port de noeuds de réseau virtuel « vNNI », et les paramètres de ports du port de réseau d'utilisateur virtuel « vUNI » comprennent un identifiant, ID, d'un port de réseau d'utilisateur, UNl, auquel le port de réseau d'utilisateur virtuel « vUNI » appartient et une largeur de bande allouée du port de réseau d'utilisateur virtuel « vUNI ».

5. Procédé de création de réseau virtuel selon la revendication 4, dans lequel l'étape de création des éléments de réseau virtuel « vNodes » et des ports virtuels selon les paramètres de ports virtuels des éléments de réseau virtuel « vNodes » comprend les étapes ci-dessous consistant à :
envoyer les paramètres de ports virtuels des éléments de réseau virtuel à un contrôleur de réseau SDN ;
créer des instances d'objets des éléments de réseau virtuel « vNodes », et générer des identifiants, ID, d'éléments de réseau virtuel « vNodes » selon des identifiants, ID, de ports renvoyés par le contrôleur de réseau SDN ;
dans lequel le contrôleur de réseau SDN est configuré de manière à :
créer des instances d'objets des ports de noeuds de réseau virtuel « vNNI » et des ports de réseau d'utilisateur virtuel « vUNI » selon les paramètres de ports virtuels ;
réserver des ressources pour les éléments de réseau virtuel « vNodes », les ports de noeuds de réseau virtuel « vNNI » et les ports de réseau d'utilisateur virtuel « vUNI » ; et
générer des identifiants, ID, de ports correspondant aux ports de noeuds de réseau virtuel « vNNI » et aux ports de réseau d'utilisateur virtuel « vUNI » ;
dans lequel, lors de la réservation des ressources pour les ports de noeuds de réseau virtuel « vNNI » et les ports de réseau d'utilisateur virtuel « vUNI », le contrôleur de réseau SDN est configuré de manière à réserver des ressources de bande passante sur les ports de noeuds de réseau, NNI, et les ports de réseau d'utilisateur, UNl, auxquels les ports de noeuds de réseau virtuel « vNNI » et les ports de réseau d'utilisateur virtuel « vUNI » appartiennent.

6. Procédé de création d'un réseau virtuel selon la revendication 1, dans lequel après l'étape de création des éléments de réseau virtuel « vNodes » et des ports virtuels selon les paramètres de ports virtuels des éléments de réseau virtuel « vNodes », le procédé comprend en outre au moins l'une des étapes ci-dessous consistant à :
modifier les noms des éléments de réseau virtuel « vNodes » créés ;
ajouter ou supprimer les ports de noeuds de réseau virtuel « vNNI » et/ou les ports de réseau d'utilisateur virtuel « vUNI » compris dans les éléments de réseau virtuel « vNodes » ; et
modifier des largeurs de bande de ports des ports de noeuds de réseau virtuel « vNNI » et des ports de réseau d'utilisateur virtuel « vUNI » compris dans les éléments de réseau virtuel « vNodes ».

7. Procédé de création de réseau virtuel selon la revendication 1, comprenant en outre l'étape ci-dessous consistant à :
créer le réseau virtuel « vNet » ;
dans un cas où le réseau virtuel « vNet » est créé avant les éléments de réseau virtuel « vNodes » et/ou les liaisons virtuelles « vLinks », le réseau virtuel « vNet » est créé selon des paramètres du réseau virtuel « vNet », et les éléments de réseau virtuel « vNodes » créés et/ou les liaisons virtuelles « vLinks » créées sont ajoutés au réseau virtuel « vNet » lorsque ou après que les éléments de réseau virtuel « vNodes » et/ou les liaisons virtuelles « vLinks » ont été créés ; ou
dans un cas où le réseau virtuel « vNet » est créé ultérieurement aux éléments de réseau virtuel « vNodes » et aux liaisons virtuelles « vLinks », le réseau virtuel « vNet » est créé conformément aux paramètres du réseau virtuel « vNet » et à des listes des éléments de réseau virtuel « vNodes » créés et des liaisons virtuelles « vLinks » créées ; ou le réseau virtuel « vNet » est créé conformément aux paramètres du réseau virtuel « vNet », et ensuite les éléments de réseau virtuel « vNodes » créés et les liaisons virtuelles « vLinks » créées sont ajoutés au réseau virtuel « vNet » créé.

8. Procédé de création de réseau virtuel selon la revendication 7, dans lequel, après que le réseau virtuel « vNet » a été créé, le procédé comprend en outre l'étape ci-dessous consistant à :
créer des services sur la base du réseau virtuel « vNet » créé ;
dans lequel les services comprennent au moins l'un des éléments parmi un réseau privé virtuel de couche deux, L2VPN, et un réseau privé virtuel de couche trois, L3VPN.

9. Procédé de création de réseau virtuel selon la revendication 7, dans lequel, après que le réseau virtuel « vNet » a été créé, le procédé comprend en outre les étapes ci-dessous consistant à :
générer un identifiant, ID, de réseau virtuel « vNet » correspondant ;
modifier le nom du réseau virtuel « vNet » ; et
ajouter ou supprimer les éléments de réseau virtuel « vNodes » contenus dans le réseau virtuel « vNet ».

10. Procédé de création de réseau virtuel selon l'une quelconque des revendications 1 à 9, dans lequel les liaisons virtuelles « vLinks » correspondent à au moins l'un des éléments suivants : un pipeline Ethernet flexible, un profil de transport à commutation d'étiquettes multiprotocole, MPLS-TP, un tunnel de chemin à commutation d'étiquettes, LSP, et un pipeline d'unité de données de chemin optique, ODUk.

11. Système de réseau de transport comprenant un gestionnaire de réseau virtuel « vNet » et un contrôleur de réseau SDN, dans lequel :
le gestionnaire de réseau virtuel « vNet » est configuré de manière à :
créer des éléments de réseau virtuel « vNodes » et des ports virtuels selon des paramètres de ports virtuels des éléments de réseau virtuel « vNodes » ;
créer des liaisons virtuelles, vLinks, entre les ports virtuels des éléments de réseau virtuel « vNodes » selon les paramètres de ports virtuels ;
dans lequel les éléments de réseau virtuel « vNodes » et les liaisons virtuelles « vLinks » forment un réseau virtuel, vNet ;
le contrôleur de réseau SDN est configuré de manière à communiquer avec le gestionnaire de réseau virtuel « vNet » et à aider le gestionnaire de réseau virtuel « vNet » à achever la création des éléments de réseau virtuel « vNodes » et des liaisons virtuelles « vLinks » ;
dans lequel les ports virtuels comprennent des ports de noeuds de réseau virtuel, vNNI, et des ports de réseau d'utilisateur virtuel, vUNI ;
dans lequel le gestionnaire de réseau virtuel « vNet » est en outre configuré de manière à :
déterminer une exigence de création de tunnels selon les paramètres de ports virtuels fournis par un utilisateur, dans lequel les paramètres de ports virtuels comprenant au moins l'un des éléments parmi : des informations de ports des ports de noeuds de réseau virtuel « vNNI » de points d'extrémité A-Z, une politique de routage, une contrainte de routage et un mode de protection ;
générer une instruction de création de tunnels selon l'exigence de création des tunnels ;
envoyer l'instruction de création de tunnels à un contrôleur de réseau SDN ; et
créer une relation de mise en correspondance entre les liaisons virtuelles « vLinks » et les tunnels, et générer des identifiants, ID, de liaisons virtuelles « vLink » selon des identifiants, ID, de tunnels renvoyés par le contrôleur de réseau SDN.

12. Appareil destiné à créer un réseau virtuel comprenant une mémoire et un processeur, la mémoire stockant un programme informatique qui, lorsqu'il est exécuté par le processeur, amène le processeur à mettre en oeuvre les étapes selon l'une des revendications 1 à 10.
